# EUROPEAN PATENT SPECIFICATION

(11) **EP 1 518 755 B1**
(45) Date of publication and mention of the grant of the patent: **04.01.2006**
(21) Application number: 04380181.0
(22) Date of filing: 17.09.2004
(51) Int. Cl.: B60R 7/04, E05D 11/10

(54) **Object storage chamber with an adjustable opening cover**
Aufbewahrungsbehälter mit einstellbarer Klappe
Chambre de stockage avec un couvercle reglable

(30) Priority: 24.09.2003 ES 200302156
(43) Date of publication of application: 30.03.2005
(73) Proprietor: Seat, S.A., 08040 Barcelona (ES)
(72) Inventor: Alonso Berrar, Armando, 08760 Martorell Barcelona (ES)
(74) Representative: Carvajal y Urquijo, Isabel

(56) References cited:
- EP-A- 0 443 919
- DE-U- 29 922 249
- US-A1- 2001 052 524

## Description

The present invention refers to an object storage chamber with an adjustable opening cover, designed for its placing under the seat of an automotive vehicle, according to the preamble of claim 1, see DE 29922249U.

Object storage receptacles provided with a cover, the opening of which is achieved by rotating it around a shaft, are well known. The degree of friction which is desired in order to cause the rotation of the cover can be chosen by adjusting tolerances or lubrication of the rotating members. Likewise, said systems usually provide some protection if the attempts to open it continue when the maximum opening point is reached.

Whatever the composition of the chamber may be, systems allowing for different degrees of opening of the cover according to the force applied thereon, are already known. Different opening positions can thus be obtained, for example for adapting to the different size of the objects which are to be introduced or removed. However, these are generally complex mechanisms in which numerous members intervene. Logically, the incorporation of said systems results in a significant cost increase for the receptacle, especially when the price of the receptacle was very moderate owing to how inexpensive the materials were. In addition, due to the complexity of the mentioned mechanisms, their operating usually has frequent problems and breakdowns.

The present invention has as an object a chamber composed of a receptacle and cover, including a mechanism allowing for the opening of the cover of the receptacle in stages. The mechanism of the invention has as an advantage its extreme simplicity both due to the reduced number of parts composing it and due to its operating.

The advantages provided by the invention are:
- Simplicity, due to the lack of complex opening mechanisms.
- Compactness, since it does not alter the dimensions of the receptacle.
- Cost-effectiveness, as it barely increases the price of the end product.

The chamber of the invention is of the type initially set forth, constituted of an approximately prismatic-shaped receptacle, open on one of its walls, and of a cover closing said open wall and which is hinged at one of its edges to the adjacent wall or walls of the receptacle.

According to the present invention, the hinge pin between the cover and the receptacle has at least one cam assembled thereto which is solidly connected to the cover, whereas the receptacle has a flange resting on the side surface of the cam and is elastically deformable in a radial direction with regard to said cam, thereby varying its distance to the hinge pin. The cam and flange have facing support surfaces the distance of which to the rotating shaft varies, for the purpose of defining locking points of the cover at the closure positions and at different opening angles. These locking points can be overcome or released by means of radial elastic deformation of the flange, by forcing the cover out of the locking portions.

The cam and/or the flange can have projections on their facing surfaces defining the support surfaces from said cam and flange. These projections will determine a suitable profile around the rotating shaft in the cam which, together with the relief formations or surface of the flange, will allow for obtaining different stops or opening points. According to the force applied on the cover, different degrees of opening will be reached, or it will pass from one to another. Likewise, in the event of overcoming the last stop, the natural collapse of the opening will be reached, without damaging the system or the receptacle equipping it.

For the purpose of achieving the desired level of friction between the cam and the flange for the opening of the cover, a section of the cam will be provided which will be in permanent contact with the flange, whatever the position of the cover may be. The choice of the materials for the cam and receptacle, as well as the tolerances between both, will thus determine the coefficient of friction between the facing surfaces and thereby the force necessary for the cover to slide and be opened.

The hinge pin can bear two cams solidly attached to the cover, one on each end of the pin, the receptacle then having two other flanges, each one of which will face and rest on one of the cams.

From the upper base, the receptacle will have anchor lugs for anchoring it to the framework of the seat of a vehicle. In this manner, since the chamber is fixed to the seat, it will allow for adjusting the height thereof, the chamber always being at the height of the user.

The features and advantages set forth will- be able to be better understood with the following description, made in reference to the attached drawings, in which a nonlimiting embodiment example is shown.

In the drawings:
Figure 1 shows a perspective of a chamber constituted according to the invention.
Figure 2 shows a section of the chamber, according to a plane perpendicular to the hinge pin of the cover.
Figure 3 shows a view similar to Figure 2, showing the different opening positions of the cover.
Figures 4 to 7 show sections similar to Figure 2, in which the position of the cam and of the flange is represented in detail in each of the positions of the covers shown in Figure 3.

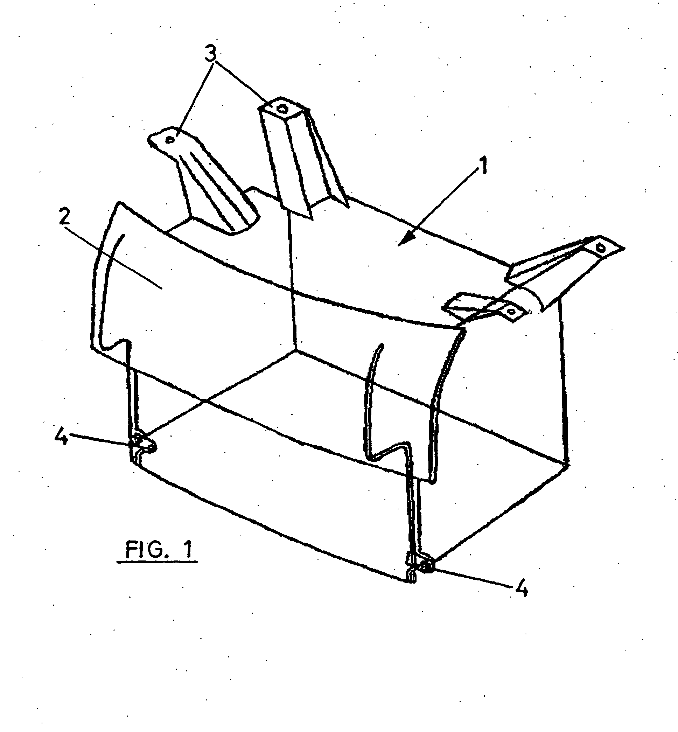

Figure 1 shows an object storage chamber made up of an approximately right prismatic-shaped, rectangular plan receptacle 1, which is open at one of its larger walls which is closed by means of a cover 2, said cover being hinged at one of its edges between the transverse adjacent walls of the receptacle 1.

The chamber of the invention is especially designed for being assembled under the seat of an automotive vehicle. To that end, anchor lugs 3 for anchoring it to the framework of the seat of the vehicle project from the upper base of the receptacle 1. In this manner, as has already been indicated, since the chamber is fixed to the framework of the seat, the height thereof can be adjusted, maintaining the distance of said chamber to the user constant at all times.

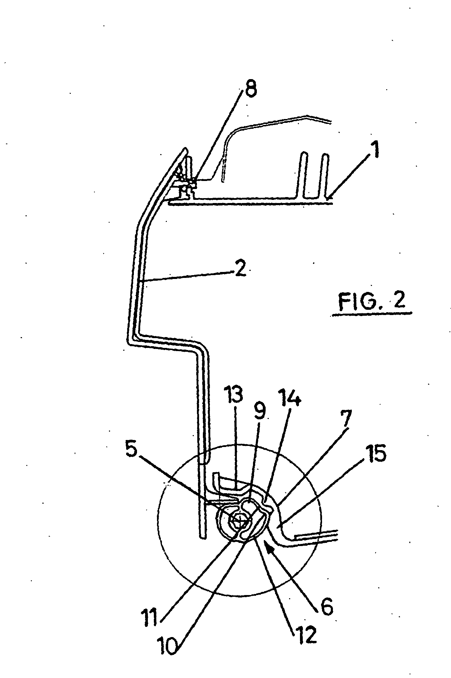

The cover 2 is linked to the receptacle 1 through hinge members 4 which, as can better be seen in Figure 2, include a rotating shaft 5 on which a cam 6 solidly attached to the cover 2 is assembled on each side. For its part, the receptacle 1 has a flange 7 on each side, such as an extension of the bottom for example, which faces the cam 6, resting on its surface.

In its upper portion, the cover 2 can have pivots 8 or anchor members, which can even be constituted of hooks retractable by means of a handle incorporated in the cover.

The cam 6, as can better be seen in Figure 2, has a profile including two projections 9 and 10 separated by a slightly recessed intermediate section 11, the projection 10 being the end of the section 12 the distance of which to the hinge pin 5 progressively increases.

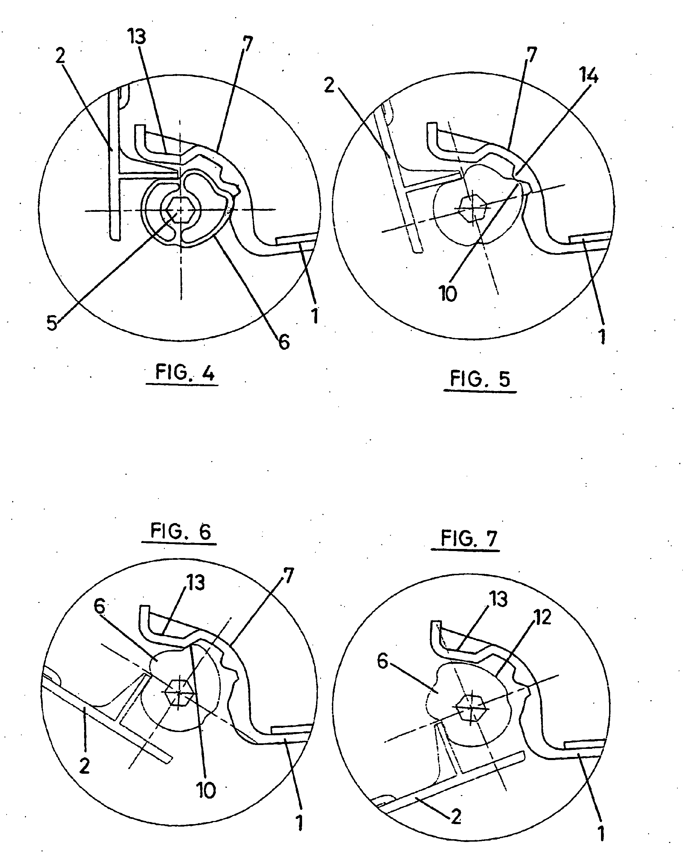

For its part, the flange 7 has a surface facing the cam 6 which includes projections 13. 14 and 15, separated by intermediate recesses, which will determine, together with the profile of the cam, stops and locking points of the cover, which determine different positions the cover can reach and which are shown in Figure 4.

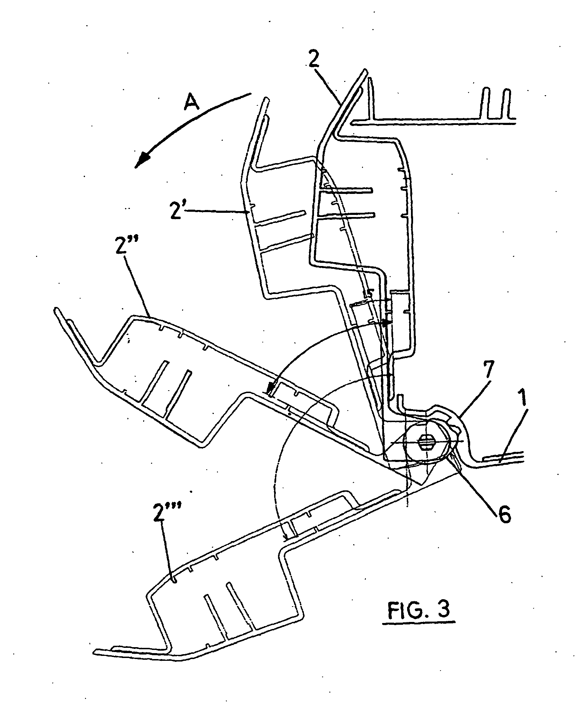

In the closed position of the cover 2, which is shown by means of a solid line in Figure 3, the cam 6 occupies the position shown in Figure 2, in which the projection 10 of the cam 6 and the projection 15 of the flange 7 rest against one another, acting as a brake. Furthermore, in this position, as has been explained in reference to Figure 2, the cover is fixed to the receptacle 1 by means of the pivot or anchor member 8.

To open the cover, the latter is rotated in the direction of arrow A of Figure 3, being able to reach a first position 2' in which the cam occupies the position shown in Figure 5, in which the projection 10 of the cam rests against the projection 14 of the flange 7, determining an intermediate locking point. To continue with the rotation of the cover in the direction of arrow A, it will be necessary to pull said cover with a force sufficient for deforming the flange 7 outwards and overcoming the projection 14, then freely rotating the cover until reaching position 2" of Figure 3, in which the cam is in the position shown in Figure 6, in which the projection 10 of said cam rests against the projection 13 of the flange 7, defining a second locking point. From this position and by exerting a new pull on the cover, the outward deformation of the flange is achieved to overcome the projection 13, the cover then being able to be rotated until resting on the surface of the ground, a, position which is referenced with the number 22"', and in which the cam 6 occupies the position of Figure 7, in which there can be no friction between the cam 6 and the flange 7 or, at the most, the flange 7 rests on section 12 of the cam through projection 13.

As can be seen, whatever the position of the cover 2 may be, there is always a section of the cam 6 in contact with the flange 7.

The degree of opening of the cover will, in any case, depend on the desired accessibility to the inside of the receptacle 1, for example depending on the size of the objects to be introduced or removed.

The anchoring of the cam 6 in the position of Figure 5 is calculated for a certain maximum torque, from which it will continue to advance until the second stop defined in Figure 6, this time more markedly pronounced. Here, also by calculating the shapes and the materials, the second stop will have to be overcome, starting from a certain torque, for example if the cover 2 is unintentionally stepped on or struck. Starting from this position, and in the situation of Figure 7, the cover 2 reaches such an angle that it will rest on the floor of the vehicle, without damaging the cam or the receptacle.

## Claims

1. An object storage chamber with an adjustable opening cover designed for its placing under the seat of an automotive vehicle, comprising an approximately prismatic-shaped receptacle (1), open at one of its walls, and a cover (2), closing said open wall and hinged at one of its edges to the adjacent wall or walls of the receptacle, **characterized in that** said hinge pin (5) has at least one cam (6) assembled thereto which is solidly attached to the cover (2), whereas the receptacle has a flange (7) resting on the side surface of the cam (6) and is elastically deformable in a radial direction with regard to said cam; which cam and flange have facing support surfaces with a variable distance to the rotating shaft, to define locking points of said cover in its closing positions and in different opening angles, said locking points being able to be overcome or released by means of elastic deformation of the flange, by forcing the cover out of the locking positions.

2. A chamber according to claim 1, **characterized in that** said hinge pin (5) has assembled thereto two cams (6) solidly attached to the cover, one on each end of the pin, the receptacle having two other flanges (7), each one of said flanges (7) faces and rests on one of the cams.

3. A chamber according to claim 1, **characterized in that** the receptacle (1) has, from its upper base, anchor lugs (3) for anchoring the receptacle (1) to the framework of the seat of a vehicle.

4. A chamber according to claim 1, **characterized in that** the cam (6) and/or the flange (7) have projections (9, 10 and 13, 14, 15) on their facing surfaces, which determine the locking points of the support surfaces between said cam and flange.

## Patentansprüche

1. Gegenstands-Aufbewahrungsraum mit einer einstellbaren Öffnungsabdeckung, wobei der Raum für seine Anordnung unter dem Sitz eines Kraftfahrzeugs ausgelegt ist, und
- einen in etwa prismaförmigen Behälter (1), der an einer seiner Wände offen ist, und
- eine Abdeckung (2) aufweist, die die offene Wand verschließt und an einem ihrer Ränder an der angrenzenden Wand oder an den angrenzenden Wänden des Behälters angelenkt ist,
**dadurch gekennzeichnet,**
- **dass** der Scharnierstift (5) wenigstens einen an ihm montierten Nocken (6) hat, der an der Abdeckung (2) fest angebracht ist,
- wobei der Behälter einen Flansch (7) hat, der an der Seitenfläche des Nockens (6) anliegt und in Radialrichtung bezüglich des Nockens elastisch verformbar ist,
- wobei der Nocken und der Flansch einander zugewandte Halteflächen mit einem variablen Abstand zu dem drehenden Schaft haben, um Arretierpunkte der Abdeckung in ihren Schließstellungen und in unterschiedlichen Öffnungswinkeln zu bilden, und
- wobei die Arretierpunkte mit Hilfe einer elastischen Verformung des Flansches, indem die Abdeckung aus den Arretierpositionen herausgedrückt wird, überwunden oder aufgegeben werden können.

2. Raum nach Anspruch 1, **dadurch gekennzeichnet, dass** an dem Scharnierstift (5) zwei Nocken (6) montiert sind, von denen jeweils einer an jedem Ende des Stiftes fest an der Abdeckung angebracht ist, wobei der Behälter zwei weitere Flansche (7) hat, von denen jeder einem der Nocken zugewandt ist und daran anliegt.

3. Raum nach Anspruch 1, **dadurch gekennzeichnet, dass** der Behälter (1) ausgehend von seiner oberen Basis Verankerungslaschen (3) zum Befestigen des Behälters (1) an dem Rahmen des Fahrzeugsitzes aufweist.

4. Raum nach Anspruch 1, **dadurch gekennzeichnet, dass** der Nocken (6) und/oder der Flansch (7) an ihren zugewandten Flächen Vorsprünge (9, 10 und 13, 14, 15) haben/hat, die die Arretierpunkte der Halteflächen zwischen Nocken und Flansch bestimmen.

## Revendications

1. Chambre de stockage avec un couvercle d'ouverture réglable, conçue pour être placée sous le siège d'un véhicule automobile, comprenant un réceptacle (1) de forme approximativement prismatique, ouvert au niveau de l'une de ses parois, et un couvercle (2) fermant ladite paroi ouverte et articulé au niveau de l'un de ses bords sur la paroi ou les parois adjacentes du réceptacle, **caractérisée en ce que** ledit axe de charnière (5) a au moins une came (6) assemblée à lui qui est fixée de manière solide au couvercle (2), alors que le réceptacle a un rebord (7) reposant sur la surface latérale de la came (6) et est élastiquement déformable dans une direction radiale par rapport à ladite came ; laquelle came et lequel rebord ont des surfaces de support se faisant face avec une distance variable par rapport à l'arbre de rotation pour définir les points de verrouillage dudit couvercle dans ses positions de fermeture et dans différents angles d'ouverture, lesdits points de verrouillage pouvant être maîtrisés ou libérés au moyen de la déformation élastique du rebord, en forçant le couvercle hors des positions de verrouillage.

2. Chambre selon la revendication 1, **caractérisée en ce que** ledit axe de charnière (5) a assemblé à lui deux cames (6) solidement fixées au couvercle, une sur chaque extrémité de l'axe, le réceptacle ayant deux autres rebords (7), chacun desdits rebords (7) faisant face à et reposant sur l'une des cames.

3. Chambre selon la revendication 1, **caractérisée en ce que** le réceptacle (1) comprend, à partir de sa base supérieure, des pattes d'ancrage (3) pour ancrer le réceptacle (1) sur le châssis du siège d'un véhicule.

4. Chambre selon la revendication 1, **caractérisée en ce que** la came (6) et/ou le rebord (7) ont des saillies (9, 10 et 13, 14, 15) sur leurs surfaces en regard, qui déterminent les points de verrouillage des surfaces de support entre ladite came et ledit rebord.
